# EUROPEAN PATENT APPLICATION

(11) **EP 2 319 811 A1**
(43) Date of publication of application: **11.05.2011**
(21) Application number: 10189532.4
(22) Date of filing: 29.10.2010
(51) Int. Cl.: C03C 3/087, C03C 3/091, C03C 4/08, B65D 1/02, B65D 81/30

(54) **Protective beer bottle with high luminous transmittance**

(30) Priority: 04.11.2009 EP 09075490
(71) Applicant: Orange Bottle Company B.V., 9714 GC Groningen (NL)
(72) Inventor: Ketelaar, Theo, 9714 GC Groningen (NL)

(57) **Abstract**

The object of the present invention is to provide a beer bottle that is, relative to existing amber and green beer bottles, more transparent at an equal cut-off wavelength. The resulting beer bottle is suitable for the storage of beer, relatively transparent and offers protection against the undesired phenomena of light-struck.

The present invention relates to a beer bottle manufactured from a reduced glass melt containing 0.01 to 1% MoO₃ and 0.05% to 0.60% SO₃. By varying the redox state of the glass during glass melting, by, for example, varying the amount of carbon in the raw batch charged to the melting furnace, the resulting beer bottle has the following spectral properties at a glass wall thickness of 2.8 mm; 5% to 70% light transmittance based on Illuminant A (LTA) and a cut-off wavelength ranging from 400 to 550 nm.

## Description

### Field of the Invention

The present invention relates to a beer bottle containing a high absorption in the ultraviolet part of the electromagnetic spectrum and simultaneously has the ability to absorb practically all visible radiation ranging from approximately 400 nm to 550 nm. The chemical glass composition of the beer bottle can be chosen as such, that, compared to conventional amber beer bottles, a higher luminous transmittance towards daylight can be obtained while offering the beer stored in the beer bottle equal or better protection against photodecomposition.

### Background of the Invention

Conventional container glasses for food and beverages, as well as vials for pharmaceuticals, can be generally categorized in clear, green and amber glass containers. Traditional amber glass ("brown container glass" based on iron and sulphur) provides good protection against photodecomposition (also "light induced degradation" or "light-struck" or "off-flavour") of, for example, beer, wine and fruit juices. Recently, beer brewers tend to prefer the use of green and clear glass bottles to amber bottles. It is generally known that the phenomena of photodecomposition of, for example, alcoholic beverages occurs in the ultraviolet part of the visible spectrum (300 to 400 nm) and partly in the visible part of the electromagnetic spectrum (400 to approximately 500 nm).
With respect to the beer industry, shifting the container glass type from amber to green or in some cases to clear glass, results in an increased exposure of beer to ultraviolet radiation and visible light. Some beer scientists try to solve this problem by making beverages or foodstuffs more resistant against this ultraviolet and light induced flavour changes by, for example, modifying the hop composition or by adding certain (bio-)chemical stabilizers.

Within the scope of this invention, a beer bottle is defined as a glass container suitable for the storage of beer, consisting of a container part (usually cylindrical), a neckpiece and a mouthpiece that can be plugged, corked, or capped.

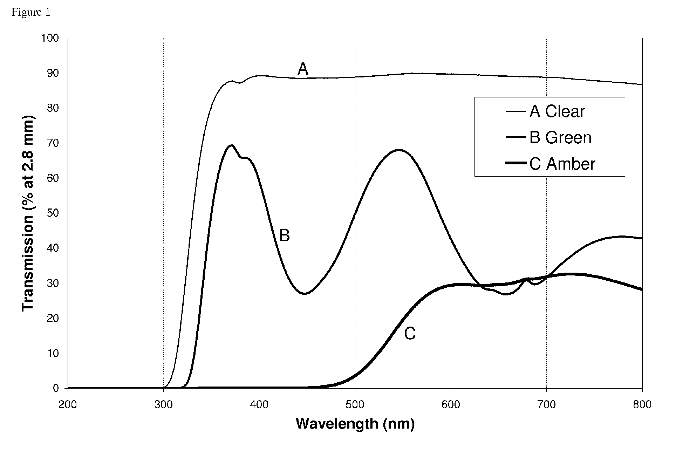

Figure 1 shows the typical transmission curves ranging from 200 to 800 nm (normalised to an equal glass thickness of 2.8 mm) for clear, green and amber container glass.

Clearly, clear container glass offers almost no protection against ultraviolet and visible light. Green glass absorbs significant parts of the UV and visible light and amber glass - based on iron and sulphur - practically absorbs all radiation up to approximately 480 nm. Table 1 summarizes the chemical, and some optical properties of conventional clear, green and amber container glass. The cut-off wavelength is defined as the wavelength, below which there is no transmission of radiation exceeding 1% at the given sample thickness. The luminous transmittance (LTA) was measured using C.I.E. 1931 standard Illuminant "A" over the wavelength range of 380 to 780 nm at 1-nanometer intervals.

**Table 1**

| | Clear | Green | Amber |
|---|---|---|---|
| SiO₂ (%) | 74.1 | 72.5 | 72.4 |
| Al₂O₃ (%) | 1.0 | 1.8 | 1.6 |
| Na₂O (%) | 12.8 | 13.1 | 12.5 |
| K₂O (%) | 0.7 | 0.5 | 0.5 |
| CaO (%) | 10.8 | 9.2 | 11.2 |
| MgO (%) | 0.05 | 2.2 | 1.2 |
| SO₃ (%) | 0.13 | 0.03 | 0.11 |
| SrO (%) | 0.04 | 0.01 | 0.02 |
| BaO (%) | 0.4 | 0.04 | 0.04 |
| Fe₂O₃ (%) | 0.06 | 0.34 | 0.30 |
| Cr₂O₃ (%) | | 0.19 | 0.04 |
| Rest (%) | <0,1% | <0.1% | <0.1% |
| Cut-off wavelength (nm at 2.8 mm) | 305 | 324 | 479 |
| Luminous transmittance (LTA; % at 2.8 mm) | 88.9 | 54.7 | 18.7 |

As Table 1 clearly shows, within the group of conventional container glasses, amber glass outperforms green and clear glass with respect to protective properties regarding photodecomposition based on its cut-off wavelength. On the other hand, the results of Table 1 also show that amber container glass has a low LTA value of approximately 19%, whereas green and clear container glass of equal wall thickness are significantly more transparent with LTA values of respectively 55% and 89%.
Figure 1 clearly shows that below the cut-off wavelength of amber container glass, no significant amount of ultraviolet radiation and visible light can enter the content of an amber container glass.

Traditionally, amber glass is melted by adding iron (e.g. iron oxide or iron sulphide) and sulphur (e.g. sulphur, sodium sulphate, Calumite) to a batch of glass raw materials that is mixed and fed to, and subsequently melted in, a continuously operated glass furnace operated under reducing conditions. Reducing conditions can be either a reducing atmosphere and/or refer to a reducing agent that is added to the batch of raw glass materials. Reducing agents commonly used for making reduced glass compositions are, for example, iron sulphide (FeS), starch, coal, and many other organic materials. Followed by the melting process, a glass container can be produced by making use of the so-called "press-blow" or 'blow-blow" technology where a charge of melted glass (a "gob") is formed to a glass container with a glass wall thickness, depending on the container glass application, ranging from approximately 2 to 5 mm. The glass container is subsequently fed to an annealing process in which the object is slowly cooled in order to relieve internal stresses after it was formed.

As to prior art, various patents refer to the addition of UV absorbing components like iron (Fe₂O₃), cerium (CeO₂), manganese (MnO) and vanadium (V₂O₅) in order to improve the ultraviolet absorption of, for example, container glass. Indeed, these additions improve the UV absorbing properties of the resulting glass but do not shift the cut-off wavelength towards the region of 450 - 600 nm. Therefore, these additions do not offer protection against the portion of visible light that can induce photodecomposition of substances like food, alcoholic beverages or medicine stored in a glass container. Therefore, they should be considered as less effective compared to traditional "low-transparent" amber container glass like, for example, an amber beer bottle.

### Detailed description of the invention

### Sample preparation

All samples are made from a mixture of standard glass raw materials. Samples are weighed and mixed prior to melting. All experiments are carried using a standard electrically heated glass laboratory furnace. Glass raw batches are melted in alumina crucibles, able to contain approximately 300 gram of raw batch. All samples are weighed, mixed and melted according to a uniform melting schedule. The schedule consists of one hour melting at 1300 °C followed by four hours melting at 1500 °C.
After the melting schedule, the crucible, containing the resulting glass, is taken out of the laboratory furnace, cast in a block-shaped glass sample using a carbon mould. The remaining fraction of the glass melt is poured on a carbon plate and pressed with another carbon plate to a disc-shaped glass sample with a thickness of approximately 5 mm. Both the block and the glass plate are annealed at 580 °C for one hour in an electrical annealing furnace.
The glass plates are polished using silicon carbide (SiC, also known as "carborundum") and cerium oxide (CeO₂) to a thickness of approximately 2.5 to 3.5 mm. These samples are used for measuring the transmission spectrum and subsequently normalizing to a wall thickness of 2.8 mm using Beer's law. From the normalized transmission spectra, the UV absorption up to 380 nm, the cut-off wavelength and the LTA value can be calculated. The block-shaped glass samples are used for measuring the chemical composition using X-ray Diffraction Fluorescence technique ("XRF").

All glasses are made making use of traditional raw materials like sand, soda, potassium carbonate, barium carbonate, boron oxide, limestone, dolomite, strontium oxide and iron oxide. Specifically, molybdenum is added to the raw batch as molybdenum trioxide (MoO₃), sulphur as sodium sulphate (Na₂SO₄) and the reducing agent as carbon with a particle size between 0.25 and 1 mm ("Norit PK0.25-1"). As a cheaper alternative, in stead of molybdenum trioxide, molybenite can be used.

The glass melting experiments are carried out in three types of base glass compositions. Typical glass compositions, expressed in approximate weight percents, are shown in Table 2.

**Table 2**

| | soda lime | borosilicate | soda barium |
|---|---|---|---|
| SiO₂ (%) | 65-75 | 65-75 | 65-75 |
| B₂O₃ (%) | | 5-15 | |
| Al₂O₃ (%) | 0-5 | 0-5 | 0-5 |
| Li₂O (%) | | 0-2 | |
| Na_{2O} (%) | 5-15 | 5-15 | 5-15 |
| K₂O (%) | 0-2 | 0-2 | 0-2 |
| MgO (%) | 1-2 | | |
| CaO (%) | 10-15 | | |
| SrO (%) | | | 0-2 |
| BaO (%) | | 0-1 | 5-15 |

### Examples

Table 3 shows the chemical composition, the cut-off wavelength and the LTA value for a soda lime, borosilicate and soda barium glass with additions of molybdenum trioxide and sodium sulphate melted under reducing conditions making use of carbon added to the batch of raw materials.

**Table 3**

| | Example 1 | Example 2 | Example 3 |
|---|---|---|---|
| SiO₂ (%) | 69.35 | 70.88 | 65.46 |
| B₂O₃ (%) | | 11.6 | |
| Al₂O₃ (%) | 3.16 | 4.28 | 2.34 |
| Li₂O (%) | | | 1.09 |
| Na₂O (%) | 11.74 | 10.59 | 7.97 |
| K₂O (%) | 0.92 | 0.93 | 4.47 |
| MgO (%) | 1.80 | 0.19 | 1.90 |
| CaO (%) | 12.63 | 0.414 | 3.22 |
| BaO (%) | | 0.664 | 9.94 |
| SrO (%) | | 0.199 | 3.24 |
| Fe₂O₃ (%) | 0.029 | 0.046 | 0.013 |
| SO₃ (%) | 0.20 | 0.10 | 0.10 |
| MoO₃ (%) | 0.086 | 0.115 | 0.070 |
| Rest (%) | <0.1 | <0.1 | <0.1 |
| Cut-off wavelength (nm at 2.8 mm) | 506 | 492 | 516 |
| Luminous transmittance (LTA; % at 2.8 mm) | 27.1 | 34.1 | 28.2 |

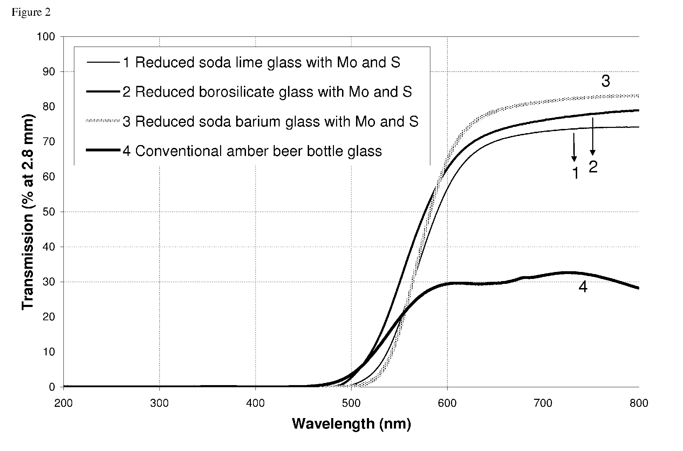

As Table 3 shows, the cut-off wavelength of the three conventional base glasses, doped with molybdenum and sulphur, are higher compared the three conventional container glasses (at equal glass thickness) of Table 1. All three glasses examples posses a higher cut-off wavelength then the amber container glass of Table 1. At the same time, all three glasses posses a significantly higher visible transmission as expressed by their LTA values. The corresponding transmission curves, normalized to a wall thickness of 2.8 mm, of Example 1, 2 and 3 are shown in Figure 2. Figure 2 also shows a conventional amber container glass transmission curve at equal thickness. As Figure 2 shows, all glasses from Table 3 are absorbing practically all radiation in the ultraviolet and in the visible part of the spectrum below their cut-off wavelength.

Example 4 in Table 4 shows the chemical composition, cut-off wavelength and luminous transmittance for a less reducing glass composition compared to Example 1 of table 3. Example 5 in table 4 shows the results for a more reducing glass composition.

**Table 4**

| | Example 4 | Example 5 |
|---|---|---|
| SiO₂ (%) | 67.97 | 68.89 |
| Al₂O₃ (%) | 3.96 | 3.12 |
| Na₂O (%) | 12.18 | 11.78 |
| K₂O (%) | 1.27 | 1.81 |
| MgO (%) | 1.50 | 1.19 |
| CaO (%) | 12.90 | 12.69 |
| Fe₂O₃ (%) | 0.017 | 0.024 |
| SO₃ (%) | 0.10 | 0.45 |
| MoO₃ (%) | 0.096 | 0.089 |
| Rest (%) | <0.1 | <0.1 |
| Cut-off wavelength (nm at 2.8 mm) | 416 | 551 |
| Luminous transmittance (LTA; % at 2.8 mm) | 74.6 | 12.1 |

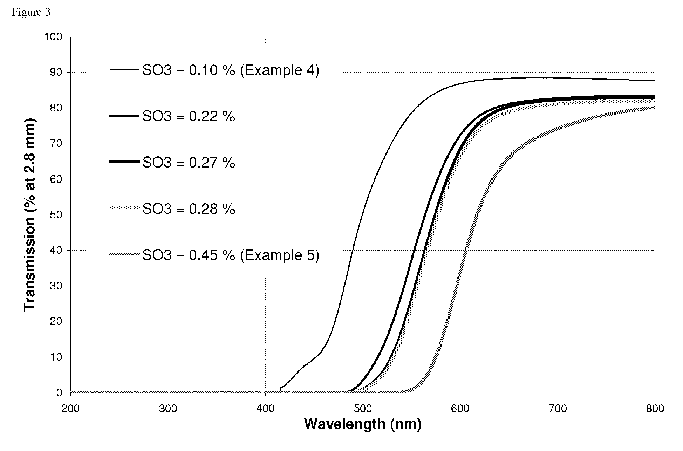

Figure 3 shows the transmission spectra at 2.8 mm of a series with variable sulphur concentration, expressed as weight percent sulphur trioxide (SO₃), including Example 4 and 5 from Table 4. Figure 3 clearly shows that even at relative mild reducing conditions, at, for example SO₃ = 0.10 %, the glass is absorbing practically all radiation in the ultraviolet part of the electromagnetic spectrum. As the reducing conditions increase, the glass increases in SO₃ concentration and the cut-off wavelength increases simultaneously. For example, at SO₃ = 0.45 %, the cut-off wavelength is approximately 70 nm higher compared to the conventional amber container glass, but, compared to the examples in Table 3, with a significantly lower LTA value.

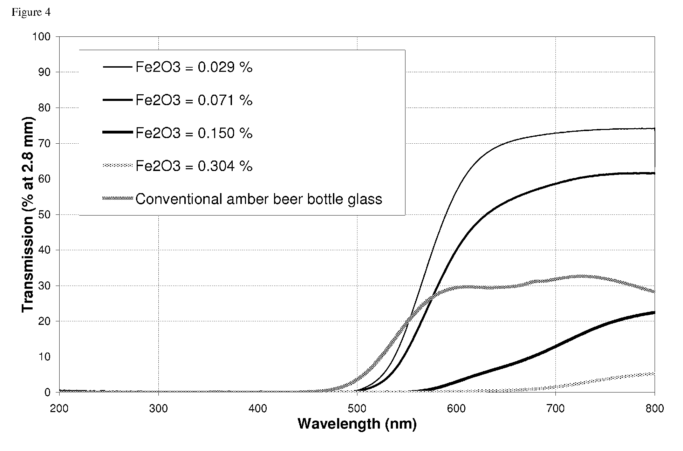

Figure 4 shows the transmission spectra made with an identical recipe of Example 1 of Table 3, with the exception of the concentration of iron (Fe₂O₃). Figure 4 also contains the spectrum of a conventional amber container glass. The figure clearly shows that, by increasing the iron oxide (Fe₂O₃) concentration from approximately 0.03 % to 0.30 % Fe₂O₃, the transmission in the area of approximately 500 to 800 nm decreases significantly.

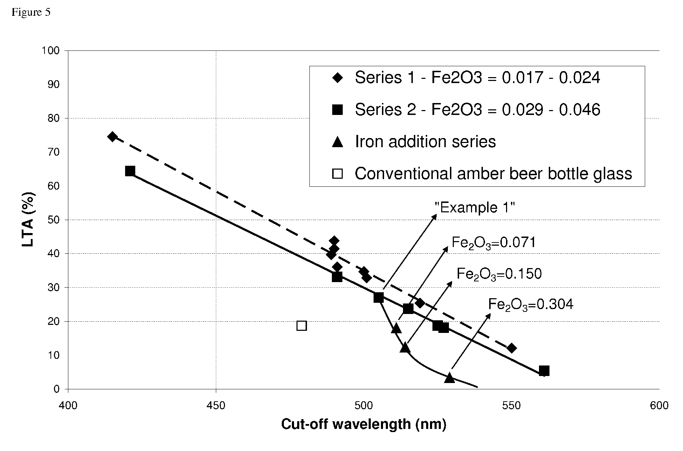

Figure 5 shows the cut-off wavelength versus the luminous transmittance (LTA) at 2.8 mm glass thickness. In Figure 5, various soda lime glasses, similar to Example 1 of Table 2, containing various concentrations of iron and subsequently grouped in two series, are plotted. Both series are indicated by "Series 1" and "Series 2". By varying the concentration of carbon in the raw batch prior to melting, cut-off wavelengths ranging from approximately 420 to 560 nm are obtained. Samples with a low cut-off wavelength contain a relatively low concentration of carbon in the raw batch; samples with a higher cut-off wavelength are made from a raw batch containing more carbon.
Series 1 is based on an iron concentration between 0.017 and 0.024 weight percent (expressed as Fe₂O₃). Series 2 shows the result based on an iron concentration at an increased level ranging from 0.029 % to 0.047% weight percent Fe₂O₃. Figure 5 also shows the correlation between cut-off wavelength and the luminous transmittance (LTA) for the iron addition series from Figure 4.
Figure 5 clearly shows that the series with the lowest iron concentration (i.e. "Series 1") all have higher LTA-values, at an equal cut-off wavelength, relative to Series 2. The figure also shows that conventional amber container glass has, at a comparable cut-off wavelength, a significantly lower LTA value.

Basically, and within the scope of this document, there are two methods in order to achieve better protection at equal transparency compared to conventional amber glass.
First, for example, the sample from Figure 5 with an iron concentration of 0.710 % Fe₂O₃, is, with the exception of the mass of iron oxide added to the raw batch, made in an identical manner as Example 1 from Table 2. The sample containing 0.071 % Fe₂O₃ has a comparable LTA value compared to conventional amber container glass, but at a cut-off wavelength of approximately 30 nm higher (511 nm vs. 479 nm). Even at this relatively high iron concentration of 0.071 weight percent Fe₂O₃, the glass offers better protection as indicated by its cut-off wavelength, at an equal LTA value, against light-struck in beer resulting from photodecomposition.
Secondly, from the series 2 in Figure 5, the two samples with a cut-off wavelength of respectively 525 and 527 nm both have a LTA value equal to conventional amber container glass. Here, the protection against photodecomposition at equal transparency is even better then the sample containing 0.071 % Fe₂O₃, and achieved by increasing the reducing condition by increasing the amount of carbon relative to, for example, Example 1.

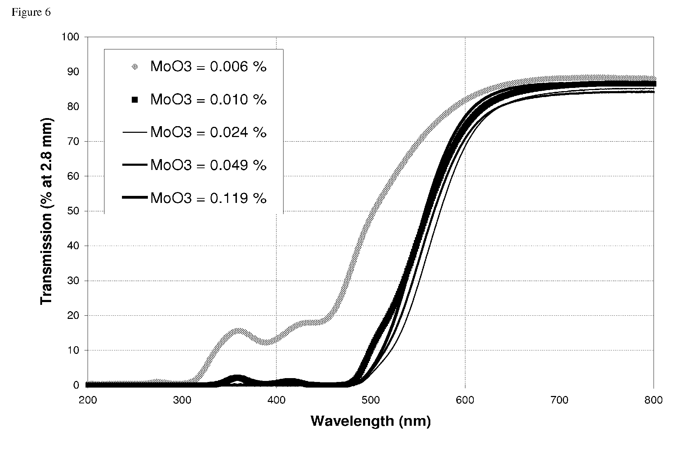

Figure 6 shows the transmission spectra at 2.8 mm of a series with variable molybdenum concentration, expressed as weight percent molybdenum trioxide (MoO₃). The concentration of MoO₃ is determined making use of Inductively Coupled Plasma Atomic Emission Spectroscopy (ICP-AES). The figure shows that the samples, made under identical circumstance with the exception of the concentration MoO₃ in the raw batch, with a concentrations above and including 0.024 weight percent MoO₃, all have a comparable shaped transmission curve and a cut-off wavelength between 485 and 495 nm. The experiment with a molybdenum concentration of MoO₃ = 0.010 % shows a slightly increased transmission and a differently shaped curve in the wavelength area of approximately 350 to 550 nm. The experiment with an even lower molybdenum concentration (MoO₃ = 0.006 %) appears to result in a spectrum being significantly "more open" compared to all other glass samples in the area of 300 to 700 nm.

## Claims

1. A beer bottle, made from a reduced glass melt being a either a soda lime glass, borosilicate glass or a soda barium glass, containing molybdenum and sulphur, having an ultraviolet transmission of less then 1% up to a wavelength of 400 nm and having a luminous transmittance towards average daylight (LTA) of at least 70%.

2. As in Claim 1, having an ultraviolet radiation and visible transmission up to a wavelength of 550 nm of less then 1%, and having a luminous transmittance towards average daylight (LTA) of at least 5%.

3. As in Claim 1, containing sulphur at a concentration of 0.05 to 0.15% (expressed as SO₃) and molybdenum at a concentration of more then 0.01% (expressed as MoO₃).

4. As in Claim 2, containing sulphur at a concentration of 0.10 to 0.60% (expressed as SO₃) and molybdenum at a concentration of at least 0.024% (expressed as MoO₃).

5. As in Claim 2, containing iron at a concentration of 0.001% to 0.1 % (expressed as Fe₂O₃).

6. A beer bottle, as described in Claim 1 and Claim 2, obtainable by a process comprising the steps of (a) mixing the raw materials, being conventional raw materials like sand, soda, lime, dolomite, a reducing agent (like carbon, starch and the like), a raw material containing molybdenum (like molybdenum trioxide, molybdenite and the like) and a raw material containing sulphur (like sulphur, sodium sulphate, Calumite and the like), and (b) charging these raw materials to a continuously operated glass furnace, and (c) melting the raw materials in a glass furnace, and (d) forming a glass gob into a beer bottle by using a glass forming technique like the press-blow or blow-blow technique, and (e) an annealing process.
